## Europäisches Patentamt

## European Patent Office

## Office européen des brevets

(19)

(11) **EP 0 628 849 B1**

(12)

# FASCICULE DE BREVET EUROPEEN

(45) Date de publication et mention
de la délivrance du brevet:
**27.08.1997   Bulletin 1997/35**

(51) Int Cl.6: **G02F 1/153**

(21) Numéro de dépôt: **94401278.0**

(22) Date de dépôt: **08.06.1994**

(54) **Vitrage électrochrome**

Elektrochrome Scheibe

Electrochromic window

(84) Etats contractants désignés:
**BE CH DE ES FR GB IT LI LU NL SE**

(30) Priorité: **11.06.1993   FR 9307096**

(43) Date de publication de la demande:
**14.12.1994   Bulletin 1994/50**

(73) Titulaire: **SAINT-GOBAIN VITRAGE**
**92400 Courbevoie (FR)**

(72) Inventeurs:
• **Lefrou, Christine**
  **F-92400 Ivry Sur Seine (FR)**
• **Garot, Florence**
  **F-93360 Neuilly Plaisance (FR)**
• **Defendini, Francis**
  **B-5300 Andenne (BE)**
• **Marrot, Odile**
  **F-28600 LUISANT (FR)**

(74) Mandataire: **Renous le Goubin, Véronique**
**Saint-Gobain Recherche,**
**39, Quai Lucien Lefranc,**
**B.P. 135**
**93303 Aubervilliers Cédex (FR)**

(56) Documents cités:
**EP-A- 0 486 387          EP-A- 0 509 276**
**GB-A- 2 007 864**

• **SOLID STATE IONICS, vol.53, Juillet 1992,**
**AMSTERDAM NL pages 479 - 489**
**C.G.GRANQUIST 'ELECTROCHROMISN AND**
**SMART WINDOW DESIGN'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention est relative au domaine des systèmes électrochromes notamment des vitrages dont la transmission lumineuse peut être modulée au moyen d'un courant électrique. L'invention s'applique plus particulièrement au contrôle des apports solaires dans les bâtiments ou habitacles des véhicules.

De façon bien connue, un système électrochrome comporte une couche d'un matériau capable d'insérer de façon réversible des cations et dont les états d'oxydation correspondant aux états inséré et désinséré sont de coloration distincte, un des états étant généralement transparent. La réaction d'insertion ou de désinsertion est commandée par application d'une différence de potentiel adéquate. Le matériau électrochrome, en général à base d'oxyde de tungstène, doit ainsi être mis en contact avec une source d'électrons telle qu'une couche électroconductrice transparente et une source de cations telle qu'un électrolyte conducteur ionique.

Par ailleurs, il est connu que pour assurer au moins une centaine de commutations, il doit être associé à la couche de matériau électrochrome une contre-électrode capable elle aussi d'insérer de façon réversible des cations, symétriquement par rapport à la couche de matériau électrochrome de sorte que, macroscopiquement, l'électrolyte apparaît comme un simple médium des cations.

La contre-électrode doit être constituée ou d'une couche neutre en coloration ou du moins transparente quand la couche électrochrome est à l'état décoloré. L'oxyde de tungstène étant un matériau électrochromique cathodique, c'est-à-dire que son état coloré correspond à l'état le plus réduit, un matériau électrochrome anodique tel que l'oxyde de nickel ou l'oxyde d'iridium, est généralement utilisé pour la contre-électrode.Il a également été proposé d'utiliser un matériau optiquement neutre dans les états d'oxydation critiques, comme par exemple l'oxyde de cérium ou des matériaux organiques comme les polymères conducteurs électroniques (polyaniline,...) ou le bleu de prusse.

De tels systèmes permettent une réelle réversibilité des phénomènes d'insertion/désinsertion, due à la source d'ions constituée par la contre-électrode.

Toutefois, il est apparu que de tels systèmes se dégradent et qu'après un certain temps, le phénomène d'électrochromisme ne se produit plus ou du moins est très nettement affaibli, ce qui se traduit par une diminution ou une suppression complète, du contraste entre l'état coloré et l'état décoloré.

Cette dégradation est mise en évidence dans trois types différents d'épreuves :

- l'exposition aux ultra-violets d'un système à l'état décoloré,
- l'exposition à la chaleur (par exemple à une température de l'ordre de 80°C),
- et le cyclage, test au cours duquel le système est soumis à un très grand nombre d'alternances état coloré/état décoloré.

De façon surprenante, pour ces trois épreuves, le résultat final est principalement le même bien que chacune ait une importance relative différente et l'analyse du système dégradé montre que la dégradation est essentiellement due à une réduction irréversible de la contre-électrode, généralement en métal, matériau non électrochrome. Ce phénomène est général à presque tous les dispositifs électrochromes à base d'électrolytes polymères - pour une raison très simple qui sera développée plus avant - à conduction protons ou lithium, l'épreuve d'exposition aux ultra-violets étant la plus dégradante dans le cas des systèmes lithium.

Si le résultat final est le même, il ne peut néanmoins en être de même pour les mécanismes amenant à celui-ci. Pour autant, les auteurs de la présente invention ont trouvé que ces dégradations étaient fortement retardées si on intercale, selon la revendication 1, une couche barrière entre l'électrolyte et la contre-électrode; en particulier une couche de $LiNbO_3$ entre un électrolyte lithium et une contre-électrode de $LiNiO_y$ ou une couche d'oxyde de tantale $TaO_5$ ou d'oxyde de niobium $Nb_2O_5$ entre un électrolyte protonique et une contre-électrode de $H_xIrO_y$.

La couche barrière interposée entre l'électrolyte et la contre-électrode doit être ouverte aux cations de l'électrolyte (protons ou cations de métaux alcalins) que l'on cherche à insérer ou désinsérer dans les deux couches de matériaux électrochromes. De plus, elle est de préférence transparente pour ne pas abaisser la transmission lumineuse du système et notamment une bonne résistance en milieu acide dans le cas des systèmes protoniques et en milieu neutre dans le cas des sytèmes lithium.

D'autre part, cette couche barrière est de préférence un filtre s'opposant au passage d'espèces ioniques ou gazeuses transportées par l'électrolyte, à l'exception bien sûr des cations, et plus particulièrement un filtre des anions et des gaz éventuellement présents dans le système (emprisonnés lors de l'assemblage ou encore formés par suite de réactions parasites de dégradation).

Par ailleurs, cette couche barrière est de préférence telle qu'elle augmente la surtension de formation d'agents réducteurs à l'interface entre l'électrolyte et la contre-électrode de matériau électrochrome anodique.

Enfin, la couche barrière est de préférence une couche isolante électronique. Pour comprendre quel peut être - ou plus exactement quels peuvent être les rôles de cette couche barrière, il est intéressant d'analyser les phénomènes qui sont susceptibles de se produire au cours de ces trois tests différents. Pour plus de clarté de l'exposé, nous allons évoquer principalement le cas d'un système comportant une électrode à base d'oxyde de tungstène $WO_3$ et une contre-électrode d'oxyde d'iridium $H_xIrO_y$ mais cet exposé peut être généralisé à tous les matériaux électrochromes à coloration anodique.

Quand le système est soumis au test U.V., en circuit ouvert et à l'état décoloré, on observe tout d'abord son bleuissement, autrement dit une insertion de cations dans la couche d'oxyde de tunsgtène. Un tel bleuissement n'est pas observé dans les deux autres tests. Toutefois, ce bleuissement est parfaitement réversible et il suffit de soumettre le système à une tension normale de décoloration pour faire disparaître cette teinte bleue et retrouver un système présentant un contraste aussi bon que le contraste initial.

Il est connu que $WO_3$ est un matériau semi-conducteur de type n, avec donc une conduction par électrons. Un rayonnement peut permettre le passage des électrons dans la bande de conduction et faciliter ainsi les réactions d'oxydation. Par contre, l'oxyde d'iridium, comme la plupart des matériaux de contre-électrode à coloration anodique, est un semi-conducteur de type p, avec une conduction électrique par trous, de sorte qu'un apport de photons a cette fois pour résultat de faciliter les réactions de réduction. En soumettant le système $WO_3/HIrO_2$ aux ultra-violets, on peut s'attendre pour $WO_3$ des réactions d'oxydation et pour la contre-électrode à des réaction de réduction.

Dans la mesure où aucun système électrochrome n'est parfaitement anhydre, combien même toutes les précautions sont prises pour éliminer toute trace d'eau, qu'en particulier, la couche $WO_3$ est hydratée au cours de son dépôt et/ou des différentes manipulations subies avant l'assemblage avec notamment des passages à l'air libre, nécessairement toujours humide, et que de surcroît, les électrolytes protons ou lithium contiennent toujours un taux d'humidité résiduel qui peut être difficilement inférieur à quelques 100 ppm, l'agent d'oxydation le plus probable côté $WO_3$ est probablement cette eau résiduelle. On se trouve alors dans une situation de pile avec la réalisation simultanée des équilibres :

$$WO_3 + xM^+ + x\ e^- \rightleftarrows MxWO_3 \qquad\qquad (1)$$

$$x_{/2}\ H_2O \rightleftarrows x_{/4}\ O_{2\ (adsorbé)} + xH^+ + xe^- \qquad\qquad (2)$$

soit au bilan

$$WO_3 + x_{/2}\ H_2O\ xM^+ \rightleftarrows MxWO_3(bleu) + x_{/4}\ O_2 + xH^+ \qquad\qquad (3)$$

M étant soit H, soit Li.

Le potentiel à courant nul de l'équilibre (2) est décalé vers les potentiels négatifs en raison de la photosensibilité de l'oxyde de tungstène de sorte que la réduction de $WO_3$ en $MxWO_3$ (M=H, Li) est favorisée; conjointement, de l'oxygène est généré sur cette même électrode.

L'hypothèse est que l'oxygène ainsi formé est suffisamment peu important et est partiellement absorbé par l'électrolyte polymère ce qui explique l'absence de formation de bulles, en tout cas à court terme.

En pratique, on atteint un état de coloration stable après quelques heures seulement, et dont le degré d'intensité à l'équilibre dépend de la longueur d'onde du rayonnement. Ce rayonnement est efficace dans le proche U.V.,pour des longueurs d'onde correspondant au visible. Il est donc possible de limiter le bleuissement mais non de le supprimer totalement à l'aide d'un filtre U.V.

De toute façon, et comme indiqué plus haut, ce n'est pas du côté de l'oxyde de tungstène mais du côté de la contre-électrode d'oxyde d'iridium que le système se dégrade irréversiblement. L'état décoloré, c'est-à-dire l'état inséré, correspond à un degré III d'oxydation. L'état dégradé indique un passage au degré 0, néanmoins, l'équilibre entre le degré III et le degré 0 est décrit dans la littérature comme très peu probable.

Dans le cas des systèmes protoniques, les auteurs de la présente invention proposent la réalisation en situation de piles des équilibres suivants :

$$H^+ + e^- \rightleftarrows \tfrac{1}{2}\ H_2 \qquad\qquad (4)$$

$$HIrO_2\ (III) \rightleftarrows IrO_2\ (IV) + e^- + H^+ \qquad\qquad (5)$$

soit au bilan

$$HIrO_2 \text{ (III)} \rightleftarrows \tfrac{1}{2}\, H_2 + IrO_2\text{(IV)} \qquad (6)$$

Cette réaction étant suivie de la réduction de Ir (IV) en Ir(0), par exemple par l'hydrogène :

$$IrO_2 \text{ (II)} + 2\, H_2 \rightleftarrows Ir\ (0) + 2\, H_2O \qquad (7)$$

Le bilan total s'écrivant alors :

$$4HIrO_2 \text{ (III)} \rightleftarrows 3IrO_2 \text{ (IV)} + Ir(O) + 2\, H_2O \qquad (8)$$

A noter que les équilibres ici proposés ne sont probablement pas les seuls à intervenir, d'autant que le rapport Ir (IV)/Ir(0) mesuré semble bien inférieur à 3. Il est donc possible que la réduction de l'oxyde d'iridium à l'état 0 soit due également à des réducteurs autre que l'hydrogène, ou que ce dernier soit formé également par d'autres voies, des produits de dégradation du polymère pouvant notamment jouer un rôle dans ces mécanismes.

Dans le cas des systèmes au lithium, avec une contre-électrode de type $AO_y$ (où A est égal par exemple à Ni, Ir ou V), on peut écrire probablement de plus les équilibres suivants:

$$H_2O + e^{-} \rightleftarrows \tfrac{1}{2}\, H_2 + OH^{-} \qquad (9)$$

$$H_2 + AO_x \rightleftarrows AO_{x-1} + H_2O \qquad (10)$$

Pour le reste, les mécanismes, que nous venons de proposer semblent également s'appliquer pour l'essentiel au cas des systèmes reposant sur l'insertion désinsertion de cations de métaux alcalins. On peut alors réécrire tous les équilibres précédents.

Si les mécanismes proposés plus haut ne sont pas uniques, il est clair que dans le cas du test U.V., le mécanisme de dégradation est essentiellement un mécanisme photo-électrochimique. Cette hypothèse est de plus renforcée par la constatation d'une accélération de la dégradation lorsque les couches de matériaux électrochromes sont placées électriquement en contact par l'intermédiaire du joint périphérique.

Par rapport à ces mécanismes, la couche barrière va devoir jouer différents rôles. Tout d'abord, nous avons indiqué précédemment que la réduction de la contre-électrode, en particulier de l'oxyde d'iridium en iridium métallique à la fois pour les systèmes à conduction lithium et pour les systèmes protoniques, était probablement due à la formation d'hydrogène (équilibre [4]). Comme la source principale de l'hydrogène est l'électrolyte (par l'intermédiaire de $H^{+}$ ou $H_2O$ résiduelle), cette formation doit s'opérer à l'interface électrolyte/oxyde d'iridium. La couche barrière va avoir principalement pour fonction de limiter cette formation d'hydrogène en augmentant la surtension de dégagement de l'hydrogène. De la remarque faite plus haut à propos du caractère photo-électrochimique du mécanisme de dégradation, il ressort que cette couche barrière doit avantageusement être un isolant électronique et contribuer à éviter tout court-circuit entre les couches électrochromes. Par ailleurs, et dans la mesure où l'hydrogène gazeux peut ne pas être le seul responsable de la dégradation de la contre-électrode, il est préférable que la couche barrière s'oppose au transit de toutes les espèces éventuellement présentes ou transitant dans l'électrolyte, à l'exception des cations (protons ou ions lithium) insérés/désinsérés dans les matériaux électrochromes.

Nous avons déjà indiqué que la couche barrière était avantageusement un filtre à toutes les espèces transportées autres que les cations de l'électrolyte. Il est de plus avantageux que ce rôle de filtre soit susceptible de s'exercer également vis-à-vis de tous les gaz pouvant se former et notamment vis-à-vis de l'hydrogène. Comme mentionné plus haut, la couche barrière est telle qu'elle augmente la surtension de dégagement de l'hydrogène, formé par la réaction $H^{+} \leftrightarrow H_2$ en milieu protonique ou $H_2O \leftrightarrow H_2$ pour les milieux lithium, à l'interface électrolyte / contre-électrode. Mais il peut de plus être souligné que l'hydrogène peut éventuellement se former en d'autres lieux du système. En particulier, en raison de la photosensibilité de $WO_3$, lors de l'exposition aux U.V., le potentiel à courant nul de la réaction de réduction des protons en hydrogène (équilibre (4)) est décalé vers les potentiels positifs ; de l'hydrogène peut donc probablement être formé côté $WO_3$, et diffuser en l'absence de couche barrière vers la contre-électrode.

Les réactions énoncées précédemment sont pour la plupart photo-électrochimiques. Or, comme déjà indiqué, la dégradation du système est également obtenue en l'absence de photons à la suite de tests thermiques ou de tests de cyclage. Les mécanismes de dégradation sont alors nécessairement différents. Sans entrer plus avant dans les détails, il est possible que, dans le cas d'une exposition à température élevée, des produits réducteurs se forment notamment par suite d'une dégradation de l'électrolyte ou de traces d'impuretés résiduelles liées à la synthèse, produits réducteurs responsables de la réduction de la contre-électrode, en particulier de l'oxyde d'iridium en iridium métallique. Pour les tests de cyclage, la dégradation est probablement plus de nature électrique car contrairement aux cas précédents, un potentiel est cette fois appliqué entre les deux couches de matériaux électrochromes. En tout état de cause, il s'avère que les couches barrières efficaces du point de vue du test U.V. permettent également d'améliorer les performances aux deux autres tests.

A titre de couche protectrice, il est plus particulièrement avantageux d'utiliser un oxyde métallique diélectrique - matériau connu pour sa perméabilité aux protons ou autres cations de métaux alcalins et qui de plus est un bon isolant électronique. Dans le cas des systèmes à conduction protonique, les matériaux diélectriques conducteurs protoniques, purs et résistants à l'acide, représentent de bonnes couches barrières.

Pour sa résistance en milieu acide et sa capacité à être déposé en couches minces selon les techniques déjà utilisées pour les couches électrochromiques, on choisira de préférence du pentaoxyde de tantale $Ta_2O_5$ de préférence dans une épaisseur comprise entre 1 et 500 nanomètres et de préférence encore entre 20 et 120 nanomètres. Les épaisseurs trop faibles sont évitées en raison de la difficulté à les déposer de façon uniforme, sans discontinuité de la couche, sur des surfaces aussi grandes que des vitrages bâtiment par exemple. Les couches les plus épaisses ajoutent une résistance ohmique non négligeable et non souhaitable.

Plus généralement, conviennent à titre de couches barrières des matériaux diélectriques tels que les oxydes de la colonne VB du tableau périodique et plus particulièrement $Ta_2O_5$ et $Nb_2O_5$ ou des alliages de ceux-ci (comme par exemple des oxydes niobium/tantale), des fluorures tels que $MgF_2$, $CeF_3$ et aussi des matériaux tels que $Sb_2O_3$, HUP (héxauranylphosphate), $Cr_2O_3$, $SiO_2$, $ZrO_2$.

Dans le cas des systèmes à conduction lithium, des couches minérales à conduction lithium pure et stables en milieu neutre sont revendiquées. Les matériaux de type $Li_3N$, $LiAlF_4$, $LiTaO_3$, $Li_3PO_4$, $LiBO_2$ et plus particulièrement $LiNbO_3$ sont de bonnes couches barrières vis-à-vis des phénomènes de dégradation mentionnés, dans des épaisseurs généralement comprises entre 1 et 500 nanomètres.

Dans le cadre de l'invention, on préfère que la couche constituant la contre-électrode soit en un matériau électrochrome anodique, notamment à base d'oxyde d'iridium du type $H_xIrO_y$, lorsqu'il s'agit d'une conduction protonique, ou à base d'oxyde de nickel. Ce qui s'est révélé très étonnant, c'est que grâce aux couches barrières selon l'invention, on pouvait utiliser non seulement l'oxyde de nickel pour une conduction de cations $Li^+$ ce qui était connu, mais aussi pour une conduction protonique. En effet, il était connu que l'oxyde de nickel était extrêmement sensible aux attaques acides, et tendait à se détériorer et à se dissoudre au contact de protons. Le fait qu'une couche barrière, qui n'empêche à l'évidence pas le transfert des protons, puisse empêcher la dégradation de l'oxyde de nickel est encore mal expliqué. On pourrait penser que cette dégradation n'était en fait pas seulement due au contact de protons, mais peut être à d'autres éléments que la couche serait apte « à filtrer ». En tout cas, l'invention permet ainsi d'élargir le champ d'utilisation des contre-électrodes à base d'oxyde de nickel.

Par ailleurs, on choisit comme matériaux constitutifs des couches électro-conductrices de préférence des oxydes métalliques dopés, comme de l'oxyde d'étain dopé au fluor $SnO_2$:F ou l'oxyde d'indium dopé à l'étain ITO. Dans ce dernier cas, il est souvent conseillé de « protéger » la couche d'ITO par une fine couche protectrice du type oxyde d'étain. Il s'est avéré, de manière inattendue également, que l'on pouvait en fait supprimer cette couche d'oxyde d'étain protectrice sans pour autant détériorer l'ITO à condition d'ajouter une seconde couche barrière, de même nature et caractéristiques que la première, mais cette fois interposée entre le matériau électrochrome cathodique et l'électrolyte. Cette seconde couche barrière peut ainsi d'abord prévenir tout risque de dissolution ou la détérioration du matériau électrochrome avec qui elle se trouve en contact direct, et ensuite, indirectement, jouer un rôle protecteur vis-à-vis des couches conductrices en ITO, sans que les phénomènes impliqués soient là encore parfaitement éclaircis.

D'autres détails et caractéristiques de l'invention sont exposées ci-après en référence aux figures et courbes annexées qui représentent :

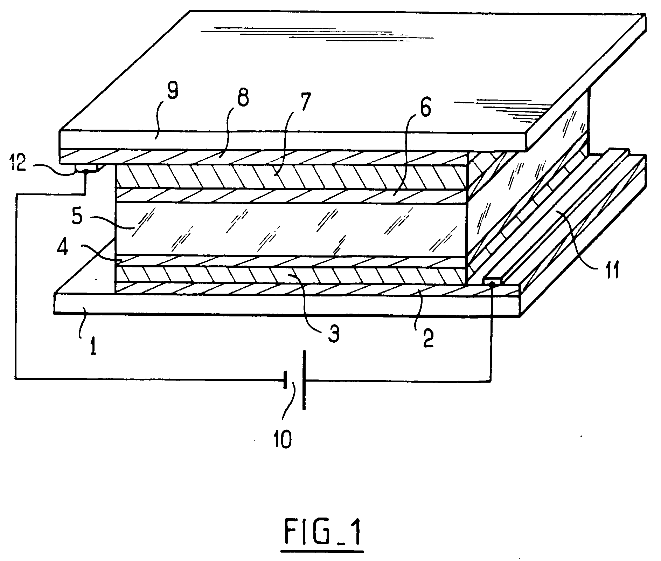

- **figure 1** : un schéma d'un système selon l'invention,
- **figure 2** : une courbe comparative illustrant la variation de la transmission lumineuse à l'état décoloré en fonction du nombre d'heures d'exposition à une source intense d'ultra-violets,
- **figure 3** : une courbe comparative illustrant la variation de la transmission lumineuse à l'état décoloré en fonction du nombre d'heures pendant lesquelles le système est porté à une température de 100°C,
- **figure 4** : les voltamogrammes comparés de couches d'oxyde d'iridium dans différents systèmes, après 600 heures à 100°C.

Pour fixer les idées, il a été schématisé un empilement constituant un exemple de système électrochrome selon l'invention. De bas en haut, le système comporte ainsi, un substrat transparent (1) - de préférence en verre ou dans tout autre matériau apte à supporter des échauffements importants, une couche électroconductrice transparente (2) dont la conductivité électronique est grande, par exemple constituée par une couche d'oxyde d'étain dopé au fluor ou une couche d'oxyde d'indium dopé à l'étain sur laquelle est déposée une couche protectrice d'oxyde d'étain comme l'enseigne la demande de brevet EP-486 387, et qui sera plus généralement désignée par la suite par l'expression "couche ITO", une couche (3) à base d'oxyde de tungstène, dite couche $WO_3$, une couche d'un électrolyte (5) du type polymère conducteur protonique ou ionique, une couche dite « barrière ou protectrice » selon l'invention (6), une contre-électrode ici constituée par une couche à base d'oxyde d'iridium (7), dite couche $IrO_2$, une nouvelle couche (8) électroconductrice transparente analogue à la couche (2) et un substrat (9). La couche (4) optionnelle entre la couche (3) à base d'oxyde de tungstène et la couche d'électrolyte (5) est une couche « barrière » de même nature que la couche (6).

Le système ainsi réalisé est en outre pourvu d'un dispositif d'alimentation comportant notamment un générateur de tension 10 permettant d'appliquer une tension aux bornes du système, au moyen de bandes conductrices 11 et 12 placées aux extrémités opposées des deux couches électroconductrices 2 et 8.

Des indications précises sur des modes de réalisation de tels systèmes sont données notamment dans les demandes de brevets européens 338 876, 408 427, 475 847, 477 065, 486 387 auxquelles il est renvoyé pour plus de détails.

Les couches barrières (4), (6) sont des couches d'oxyde de tantale $Ta_2O_5$, d'une épaisseur de l'ordre de 0,040 micron, obtenues par pulvérisation magnétron à partir d'une cible de tantale métallique, dans un plasma argon/oxygène (40% d'oxygène en volume), sous une pression de 5000 Pa. A noter que la couche déposée dans de telles conditions semble relativement sous-stoechiométrique, le tantale étant probablement à un degré d'oxydation inférieur à 5.

Différents systèmes électrochromes, avec ou sans couches barrières ou protectrices, mais pour le reste rigoureusement identiques ont été soumis à des tests de vieillissement aux ultra-violets et à température élevée, le système étant testé "abandonné", à partir d'un état initial décoloré, sans cyclage de coloration/décoloration. Autrement dit, la couche $WO_3$ est initialement à l'état désinsérée tandis qu'au contraire, la couche $IrO_2$ est protonée.

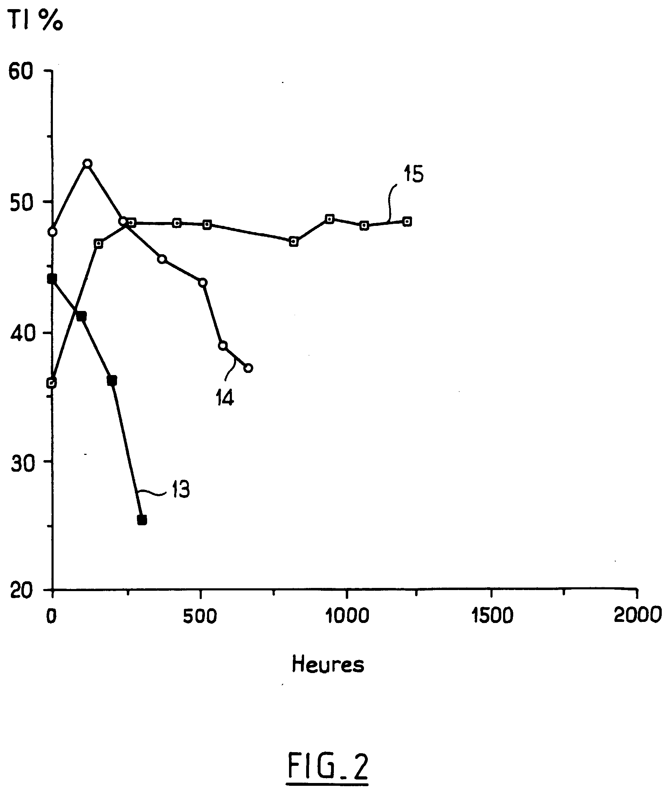

A la figure 2, on a représenté l'évolution de la courbe représentative de la transmission lumineuse du système lorsque celui-ci est éclairé par une lampe U.V., par un rayonnement à 340nm de $0{,}55 Wm^{-2}nm^{-1}$ correspondant à une température d'un panneau noir ainsi éclairé de 89°C. La courbe 13 avec des points carrés noirs a été obtenue avec un système comportant un joint périphérique relativement électroconducteur, de sorte qu'au repos, les couches $WO_3$ et $IrO_2$ sont pratiquement isopotentielles. Après environ 250 heures, la transmission lumineuse $T_L$ système n'est plus que de l'ordre de 25%, et surtout, le système se dégrade à un point tel que la commutation devient impossible, la coloration n'est plus réversible par application d'une différence de potentiel.

La courbe 14 (points ronds blancs) correspond à un système avec un joint ayant une faible conductivité électrique. On constate que cette fois, la transmission lumineuse du système s'accroît pendant les toutes premières heures du test puis décroît comme dans le cas précédent, la dégradation complète étant obtenue après environ 600 heures, des niveaux satisfaisants de transmission lumineuse étant encore obtenus après environ 500 heures. Le pic des premières heures traduit une sorte de formatage du système dû probablement à l'insertion de protons dans la couche $IrO_2$. Ce phénomène est bien connu et généralement observé de façon parallèle lors des premières commutations d'un nouveau système, la capacité d'insertion de la couche $IrO_2$ s'améliorant en début de cyclage. Il est par contre plus étonnant de ne pas l'avoir constaté dans le cas de la courbe 13. L'hypothèse avancée par les auteurs de la présente invention est qu'alors, les mécanismes de dégradation aux temps courts sont déjà importants et masquent le gain du formatage. La réduction de l'oxyde d'iridium dans le cas de la courbe 13 étant favorisée par l'oxydation de l'eau côté oxyde de tungstène.

De toute façon, même si l'amélioration est sensible, la destruction complète du système est constatée après un peu plus de 600 heures et le système a des performances moindres après seulement une centaine d'heures. Tel n'est pas le cas si, conformément à l'invention et comme illustré à la courbe 15, une couche d'oxyde de tantale 6 est interposée entre l'électrolyte 5 et la contre-électrode 7 d'oxyde d'iridium.

En conclusion, il est clair que l'insertion d'une couche protectrice côté oxyde d'iridium améliore très sensiblement la résistance aux U.V du système.

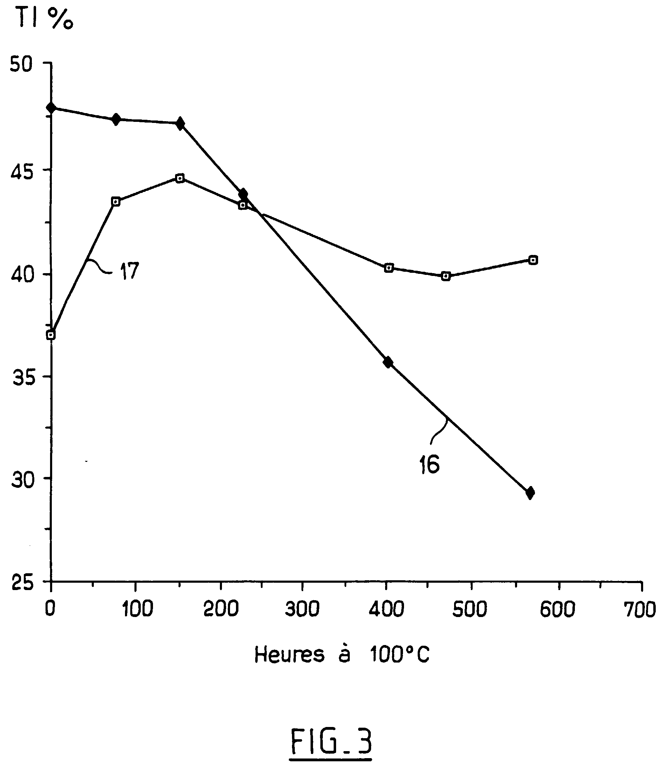

Le second aspect du « vieillissement » des systèmes électrochromes est illustré par l'évolution de la transmission lumineuse à l'état décoloré quand le système est porté à une température élevée par exemple de 100°C. Les courbes 16, 17 représentées à la figure 3 sont caractéristiques d'un système sans couche protectrice (courbe 16) ou avec une couche protectrice côté oxyde d'iridium (courbe 17). Après 200 heures, le système sans couche protectrice commence à se dégrader et la baisse de transmission lumineuse s'accroît très vite. Dans le cas par contre d'un système protégé selon l'invention, de bons niveaux de transmission lumineuse sont encore obtenus après 500 heures, la dégradation des performances du système se faisant à une vitesse bien moindre.

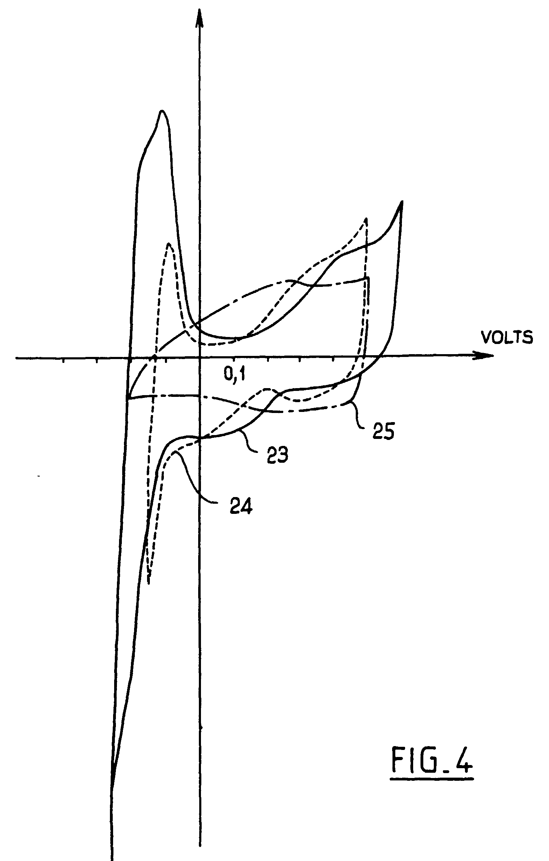

Une autre façon d'illustrer l'invention est de comparer les capacités d'insertion après cyclage de systèmes non protégés, protégés par une couche barrière selon l'invention ou encore "protégés" par une couche d'oxyde de tantale disposée non du coté de la contre-électrode mais du coté de $WO_3$. A la figure 4 où sont représentés les voltamogrammes (les potentiels étant mesurés par rapport à une électrode de référence au calumel saturé) de 3 couches d'oxyde d'iridium mesurés après ouverture d'un système placé pendant 600 heures à 100°C. La courbe 23 correspond à un système non protégé, sans couche Ta$_2$O$_5$, la courbe 24 à un système muni d'une couche "protectrice" à l'interface oxyde de tungstène/électrolyte, sans couche barrière disposée selon l'invention et la courbe 25 à un système selon l'invention muni d'une couche Ta$_2$O$_5$ à l'interace oxyde d'iridium/électrolyte.

La courbe 23 présente des pics très importants qui trahissent la présence de réactions chimiques parasites (en l'occurrence l'électrolyse de l'eau avec en bas à gauche un pic correspondant probablement à la réduction H$^+\leftrightarrow$H$_2$ et en haut à droit à l'oxydation H$_2$O$\leftrightarrow$O$_2$. En d'autres termes, la capacité d'insertion d'une telle couche est quasi nulle. Tel est aussi le cas pour la courbe 24 où on constate de plus que le pic correspondant à la réaction de réduction de l'eau en hydrogène est aux alentours de -0,1 volts alors que dans le système non "protégé" 23, ce pic est à -0,2 volts. Autrement dit, placée uniquement à l'interface entre l'oxyde de tungstène et l'électrolyte, la couche "protectrice" est sans effet.

Par contre, la courbe 25 est très "carrée" et démontre qu'en restant dans des limites de potentiel comprises par exemple entre -0,2 volts et +0,5 volts, aucune réaction parasite ne vient gêner les réactions de désinsertion/insertion.

Pour ce qui est des tests de cyclage, une cellule sans couche barrière selon l'invention commence à se dégrader après quelques centaines de cycles, pour les températures supérieures à 50°C, alors que dans les mêmes conditions de cyclage, aucune dégradation n'est observée avec un système selon l'invention même après plusieurs milliers de cycles.

Il doit être noté que le système électrochrome selon peut également comporter une seconde couche (4) protectrice, par exemple de type Ta$_2$O$_5$, intercalée entre la couche d'oxyde de tungstène (3) et la couche d'électrolyte (5). Cette couche protectrice supplémentaire permet d'une part d'améliorer encore les performances aux cyclage, à température élevée, en prévenant la dissolution de l'oxyde de tungstène dans l'électrolyte. D'autre part, sa présence permet de pouvoir éventuellement supprimer la fine couche d'oxyde d'étain surmontant la couche électroconductrice (2) en ITO, sans que cela entraîne de dégradation significative de celle-ci. On a ainsi pu vérifier que l'empilement avec deux couches barrières de Ta$_2$O$_5$ utilisant des couches conductrices d'ITO dépourvues de surcouches de SnO$_2$ présentait une durabilité, et notamment une tenue en température au moins aussi bonne que l'empilement muni d'une seule couche de Ta$_2$O$_5$ côté contre-électrode et utilisant des couches ITO avec surcouches en SnO$_2$ (résistance d'au moins plusieurs centaines d'heures à 100°C).

## Revendications

1. Système électrochrome comportant au moins un substrat transparent (1,9) sur lequel sont disposées une couche électroconductrice transparente (2), une couche d'un matériau électrochrome cathodique (3) susceptible d'insérer de façon réversible des cations M$^+$ de type H$^+$ ou Li$^+$, une couche d'électrolyte (5), une couche d'une contre-électrode faite d'un matériau électrochrome anodique (7) et une seconde couche électroconductrice (8), **caractérisé par** l'interposition entre l'électrolyte (5) et la contre-électrode (7) d'une couche barrière (6) qui est ouverte à la diffusion des cations M$^+$ et qui est constituée par des matériaux suivants : oxydes de la colonne VB du tableau périodique et plus particulièrement Ta$_2$O$_5$ et Nb$_2$O$_5$ ou des alliages de ceux-ci comme par exemple des oxydes niobium/tantale, CeF$_3$, Sb$_2$O$_3$, hexauranylphosphate HUP, Cr$_2$O$_{3r}$, ZrO$_2$ ou par un conducteur ionique de type Li$_3$N, LiTaO$_3$, LiAlF$_4$, Li$_3$PO$_4$, LiBO$_2$ ou LiNbO$_3$, plus particulièrement dans le cas où M = Li.

2. Système électrochrome selon la revendication 1, **caractérisé en ce que** ladite couche barrière (6) est transparente.

3. Système électrochrome selon l'une des revendications précédentes, **caractérisé en ce que** ladite couche barrière (6) est résistante en milieu acide lorsque M=H ou en milieu neutre lorsque M=Li.

4. Système électrochrome selon l'une des revendications précédentes, **caractérisé en ce que** tout en étant ouverte à la diffusion des cations M$^+$, ladite couche barrière (6) est un filtre à des espèces ioniques ou gazeuses transportées dans l'électrolyte.

5. Système électrochrome selon l'une des revendications précédentes, **caractérisé en ce que** ladite couche barrière (6) est en un matériau qui augmente la surtension d'agents réducteurs à l'interface entre l'électrolyte (5) et la contre-électrode (7).

6. Système électrochrome selon l'une des revendications précédentes, **caractérisé en ce que** ladite couche barrière (6) est faite d'un matériau isolant électronique.

7. Système électrochrome selon l'une des revendications précédentes, **caractérisé en ce que** la couche barrière est d'une épaisseur comprise entre 1 et 500 nanomètres et de préférence entre 20 et 120 nanomètres.

8. Système électrochrome selon l'une des revendications précédentes, **caractérisé en ce que** l'électrolyte étant un matériau conducteur protonique, la contre-électrode (7) est à base d'oxyde d'iridium du type $H_xIrO_y$ ou à base d'oxyde de nickel du type $H_xNiO_y$.

9. Système électrochrome selon l'une des revendications 1 à 7, **caractérisé en ce que** l'électrolyte étant un matériau conducteur au lithium, la contre-électrode (7) est à base d'oxyde de nickel du type $Li_xNiO_y$.

10. Système électrochrome selon l'une des revendications précédentes, **caractérisé en ce que** les couches électro-conductrices (2, 4) sont en oxyde métallique dopé, notamment en oxyde d'étain dopé au fluor $SnO_2$:F ou en oxyde d'indium dopé à l'étain ITO éventuellement surmonté d'une couche d'étain.

11. Système électrochrome selon l'une des revendications précédentes, **caractérisé en ce qu'**il comporte en outre, une seconde couche barrière (4) interposée entre la couche de matériau électrochrome cathodique (3) et l'électrolyte (5).

## Patentansprüche

1. Elektrochromes System, das mindestens ein transparentes Substrat umfaßt, auf welchem eine transparente elektrisch leitfähige Schicht (2), eine Schicht (3) aus einem kathodischen elektrochromen Material, in welches Kationen $M^+$ des Typs $H^+$ oder $Li^+$ reversibel eingelagert werden können, eine Elektrolytschicht (5), eine aus einem anodischen elektrochromen Material hergestellte Gegenelektrodenschicht (7) und eine zweite elektrisch leitfähige Schicht (8) aufgebracht sind, **dadurch gekennzeichnet, daß** man zwischen dem Elektrolyten (5) und der Gegenelektrode (7) eine Sperrschicht (6) anordnet, welche für die Diffusion der Kationen $M^+$ durchlässig ist und aus den Materialien Oxide von Elementen der Gruppe VB des Periodensystems, insbesondere $Ta_2O_5$ und $Nb_2O_5$ oder deren Mischungen, beispielsweise Niob-Tantal-Oxide, $CeF_3$, $Sb_2O_3$, Hexauranylphosphat (HUP), $Cr_2O_3$ und $ZrO_2$ oder aus einem Ionenleiter des Typs $Li_3N$, $LiTaO_3$, $LiAlF_4$, $Li_3PO_4$, $LiBO_2$ oder $LiNbO_3$, insbesondere wenn M = Li ist, besteht.

2. Elektrochromes System nach Anspruch 1, **dadurch gekennzeichnet, daß** die Sperrschicht (6) transparent ist.

3. Elektrochromes System nach einem der vorhergehenden Ansprüche, **dadurch gekennzeichnet, daß** die Sperrschicht (6) im sauren Medium, wenn M = H, oder im neutralen Medium, wenn M = Li, beständig ist.

4. Elektrochromes System nach einem der vorhergehenden Ansprüche, **dadurch gekennzeichnet, daß** die Sperrschicht (6) für im Elektrolyten transportierte ionische oder gasförmige Spezies ein Filter ist, während sie die Diffusion der Kationen $M^+$ vollständig zuläßt.

5. Elektrochromes System nach einem der vorhergehenden Ansprüche, **dadurch gekennzeichnet, daß** die Sperrschicht (6) aus einem Material besteht, durch welches die Überspannung für Reduktionsmittel an der Grenzfläche zwischen Elektrolyten (5) und Gegenelektrode (7) erhöht wird.

6. Elektrochromes System nach einem der vorhergehenden Ansprüche, **dadurch gekennzeichnet, daß** die Sperrschicht (6) aus einem gegen Elektronen isolierenden Material hergestellt ist.

7. Elektrochromes System nach einem der vorhergehenden Ansprüche, **dadurch gekennzeichnet, daß** die Dicke der Sperrschicht 1 bis 500 Nanometer und vorzugsweise 20 bis 120 Nanometer beträgt.

8. Elektrochromes System nach einem der vorhergehenden Ansprüche, **dadurch gekennzeichnet, daß** der Elektrolyt aus einem protonenleitenden Material besteht und die Gegenelektrode (7) Iridiumoxid des Typs $H_xIrO_y$ oder Nickeloxid des Typs $H_xNiO_y$ zur Grundlage hat.

9. Elektrochromes System nach einem der Ansprüche 1 bis 7, **dadurch gekennzeichnet, daß** der Elektrolyt aus einem lithiumleitenden Material besteht und die Gegenelektrode (7) Nickeloxid des Typs $Li_xNiO_y$ zur Grundlage hat.

10. Elektrochromes System nach einem der vorhergehenden Ansprüche, **dadurch gekennzeichnet, daß** die elektrisch leitfähigen Schichten (2, 8) aus dotiertem Metalloxid, insbesondere mit Fluor dotiertem Zinnoxid, $SnO_2$:F, oder mit Zinn dotiertem Indiumoxid, ITO, bestehen und gegebenenfalls mit einer Zinnschicht überzogen sind.

11. Elektrochromes System nach einem der vorhergehenden Ansprüche, **dadurch gekennzeichnet, daß** es außerdem eine zweite Sperrschicht (4) enthält, die zwischen der Schicht (3) aus kathodischem elektrochromem Material und dem Elektrolyten (5) angeordnet ist.

## Claims

1. Electrochromic system comprising at least one transparent substrate, on which are deposited a transparent electrically conducting film (2), a film of a cathodic electrochromic material (3) capable of reversibly inserting $M^+$ cations of the type $H^+$ or $Li^+$, a film of electrolyte (5), a film of a counter-electrode made of an anodic electrochromic material (7) and a second electrically conducting film (8), characterized by the interposition between the electrolyte (5) and the counter-electrode (7) of a barrier film (6) which is open to the diffusion of the $M^+$ cations and which is constituted of the following materials: oxides of column VB of the periodic table and, more especially, $Ta_2O_5$ and $Nb_2O_5$ or alloys of these such as, for example, of the niobium/tantalum oxides, $CeF_3$, $Sb_2O_3$, hexauranyl phosphate HUP, $Cr_2O_{3r}$, $ZrO_2$ or of an ion conductor of the type $Li_3N$, $LiTaO_3$, $LiAlF_4$, $Li_3PO_4$, $LiBO_2$ or $LiNbO_3$, more especially in the case where M=Li.

2. Electrochromic system according to claim 1, characterized in that said barrier film (6) is transparent.

3. Electrochromic system according to one of the preceding claims, characterized in that said barrier film (6) is resistant in acid medium when M=H or in neutral medium when M=Li.

4. Electrochromic system according to one of the preceding claims, characterized in that, while being open to the diffusion of the $M^+$ cations, said barrier film (6) is a filter to ion or gaseous species transported in the electrolyte.

5. Electrochromic system according to one of the preceding clams, characterized in that said barrier film (6) is of a material which increases the overvoltage of reducing agents at the interface between the electrolyte (5) and the counter-electrode (7).

6. Electrochromic system according to one of the preceding claims, characterized in that said barrier film (6) is made of an electron insulating material.

7. Electrochromic system according to one of the preceding claims, characterized in that the barrier film is of a thickness of from 1 to 500 nanometres and preferably from 20 to 120 nanometres.

8. Electrochromic system according to one of the preceding claims, characterized in that, the electrolyte being a proton conducting material, the counter-electrode (7) is based upon iridium oxide of the type $H_xIrO_y$ or based upon nickel oxide of the type $H_xNiO_y$.

9. Electrochromic system according to one of claims 1 to 7, characterized in that, the electrolyte being a lithium conducting material, the counter-electrode (7) is based upon nickel oxide of the type $Li_xNiO_y$.

10. Electrochromic system according to one of the precedng claims, characterized in that the electrically conducting films (2, 4) are of doped metallic oxide, notably of tin oxide doped with fluorine $SnO_2{:}F$ or of indium oxide doped with tin ITO, possibly overlain with a layer of tin.

11. Electrochromic system according to one of the preceding claims, characterized in that it comprises, in addition, a second barrier film (4) interposed between the film of cathodic electrochromic material (3) and the electrolyte (5).

FIG_1

FIG. 2

FIG.3

VOLTS

0,1

25

23

24

FIG.4